# EUROPEAN PATENT SPECIFICATION

(11) **EP 2 394 550 B1**
(45) Date of publication and mention of the grant of the patent: **23.03.2016**
(21) Application number: 11168400.7
(22) Date of filing: 01.06.2011
(51) Int. Cl.: A47K 1/05

(54) **A device for mounting a wash basin or the like to a wall and methods for its use**
Vorrichtung zur Montage eines Waschbeckens oder dergleichen an eine Wand und Verwendungsverfahren dafür
Dispositif de montage d'un lavabo ou similaire sur un mur et procédés pour son utilisation

(30) Priority: 09.06.2010 SE 1050591
(43) Date of publication of application: 14.12.2011
(73) Proprietor: Ifö Sanitär AB, 295 22 Bromölla (SE)
(72) Inventor: Szafarczyk, Martin, 46483 WESEL (DE); Danielsson Spogardh, Stefan, 374 53 ASARUM (SE)
(74) Representative: Ström & Gulliksson AB

(56) References cited:
- DE-U1- 9 114 083
- US-A- 2 208 199

## Description

### Technical Field

The present invention relates to a device for mounting a wash basin or the like to a wall provided with at least one fixed attachment screw, extending perpendicularly out from the wall, the wash basin having at least one hole in its back wall with greater cross dimension than the diameter of the attachment screw. It also relates to methods for the use of this mounting device.

### Background of the Invention

DE 91 14 083 U1 discloses a mounting device according to the preamble of claim 1 and a method according to the preamble of claim 8.

A wash basin or the like is today normally mounted to a wall in the following way. Attachment screws (normally two screws) are securely fastened in the wall and extend perpendicularly out from the wall. The wash basin, which may weigh up to 25-30 kg, is lifted and pushed onto the attachment screws. This is an operation which may require two persons or the use of assisting mounting means. In the next step, a first person may hold the wash basin in position on the attachment screws, whereas a second person fastens washers and nuts thereto, so that the wash basin is tightened against the wall.

This is obviously a tedious and labor-intensive process, which should be rationalized for saving time and money.

A further known difficulty with the traditional mounting described above is that it may be awkward to obtain exactly the same height for the two attachment screws in the wall. A deviation may result in that the mounted wash basin does not obtain a really horizontal position, unless separate, often rather complicated measures are taken.

The object of the invention is to obtain a mounting without the above stated and other drawbacks, so that a single person normally can mount any wash basin in a shorter time and with fewer difficulties than earlier. The horizontal position of the wash basin can also be obtained in a simpler way.

### The Invention

A mounting device according to the invention is characterized by the features of claim 1.

The mounting sleeve may have longitudinal, flexible tongues with internal thread portions thereon for enabling the mounting sleeve to be pushed onto the attachment screw.

For enabling height adjustment of the wash basin, the mounting sleeve may be provided with a longitudinal eccentric portion.

In an embodiment not according to the invention, the flexible holding means is at least one, preferably two wings extending generally perpendicularly out from one end of the mounting sleeve.

The mounting sleeve is preferably provided with a longitudinally flexible portion, preferably in the form of a thread-shaped spiral at the end of the mounting sleeve opposite the wings. This longitudinal flexibility will allow the mounting sleeve to be compressed or shortened during the mounting, which is an advantage.

In another embodiment not according to the invention, the flexible holding means is guide wings extending generally perpendicularly out in diametrically opposite directions from one end of the mounting sleeve, the guide wings together having a greater span than the greatest cross dimension of the hole, wherein each guide wing is provided with a holding wing generally extending in the longitudinal direction of the mounting sleeve, the holding wings together having a smaller span than the greatest cross dimension of the hole.

In an embodiment according to the invention, the flexible holdings means is a number of wings extending obliquely out from an end of the mounting sleeve and forming a funnel.

In a practical device of this embodiment two opposite triangular ribs are arranged under the funnel, the ribs having lower edges extending generally perpendicularly to the mounting sleeve. At its end opposite the wings the mounting sleeve has two flanges extending oppositely out perpendicularly from the mounting sleeve and in directions parallel with the ribs, wherein the distance between the wings and the flanges corresponds to the thickness of the wash basin wall with the hole. The wash basin wall hole is oval and allows the passing through of the flanges in its greatest cross dimension, and the funnel has an oval shape.

The attachment nut preferably has a hood portion for covering the flanges without contact. In this way the attachment nut will bear against the wash basin wall and not against the mounting sleeve flanges, which is advantageous for the mounting sleeve.

A method for mounting a wash basin or the like with a mounting device according to the embodiments not according to the invention is characterized in
that the mounting sleeve is attached to the attachment screw,
that the wash basin is pushed with its hole over the mounting sleeve, whereby flexible holding means towards the end of the mounting sleeve remote from the wall are folded in and then at the end of the operation are allowed to flex out outside said hole at the back side of the wash basin back wall, and
that the attachment nut is screwed onto the attachment screw to fix the wash basin to the wall.

With prior art mounting methods a possibly needed height adjustment of a wash basin mounted on two attachment screw is awkward to obtain. The wash basin is normally first securely fastened, whereupon deviations from the horizontal position are measured with a water level. One attachment nut is loosened somewhat, and the wash basin is carefully knocked into the correct position, whereupon the nut is again tightened. Alternatively, a special, separate eccentric nut or washer may be used.

Each mounting sleeve may be rotated to a desired extent on the attachment screw in order to place a longitudinal eccentric portion thereon in a suitable position in relation to the hole for compensating for possible height differences between the attachment screws.

A method for mounting a wash basin or the like with a mounting device according to the embodiment according to the invention comprises the features of claim 8.

By means of the mounting sleeve with its flexible holding means, the wash basin can - after mounting - be left hanging thereon secured by the holding means, and the same mounting person can in a separate stage mount and tighten the attachment nuts.

Throughout this description and also in the claims the product "wash basin" is used. It should, however, be stressed that this product is only an example and that the invention may be utilized for any sanitary product or other product that is heavy and/or clumsy and is to be mounted on wall attachment screws, often with a need for height adjustment. Other examples of products are WC bowls, bathroom furniture, and mirror cabinets.

### Brief Description of the Drawings

The invention will be described in further detail below under reference to the accompanying drawings, in which
Fig 1 schematically and in section illustrates the final stage of the mounting of a wash basin or the like to a wall with attachment screws by means of an embodiment of a mounting device not according to the invention,
Fig 2 is an enlargement of a portion of Fig 1,
Fig 3 is an isometric view of a mounting sleeve belonging to the mounting device according to Fig 1,
Figs 4 and 5 are sectional views of the mounting sleeve of Fig 3,
Fig 6 is an isometric view of an attachment nut belonging to the mounting device according to Fig 1,
Fig 7 is a sectional view of the attachment nut of Fig 6,
Figs 8a-f illustrate different stages in the mounting of a wash basin or the like to a wall by means of the embodiment of the mounting device not according to the invention,
Figs 9a and 9b illustrate the mounting of a wash basin by means of the mounting device according to Fig 1, if there is a need for height adjustment,
Fig 10 is an end view of a mounting device for illustrating a dismounting stage,
Fig 11 is an isometric view of another embodiment of a mounting sleeve for a mounting device not according to the invention,
Fig 12 is an end view (along the lines XII-XII in Fig 13a) of the mounting sleeve of Fig 11 mounted on an attachment screw and on its way to enter a wash basin hole, and
Figs 13a-d illustrate different stages in the mounting of a wash basin or the like to a wall by means of the embodiment of the mounting device not according to the invention,
Figs 14 and 15 are isometric views of an embodiment of a mounting sleeve for a mounting device according to the invention,
Fig 16 is a cross-sectional view of the mounting sleeve according to Figs 14 and 15,
Figs 17 and 18 are isometric views of an attachment nut to be used for the embodiment of a mounting device according to the invention,
Fig 19 is a cross-sectional view of the attachment nut according to Figs 17 and 18,
Fig 20 is an isometric view from the back side of a wash basin to be mounted by the embodiment of a mounting device according to the invention,
Fig 21 is a cross-sectional view of the wash basin with the embodiment of the mounting sleeve introduced into one of its holes,
Fig 22 is a cross-sectional view of the wash basin towards its back wall (looking to the right in Fig 21) with the mounting sleeve in the position shown in Fig 21,
Fig 23 is a view corresponding to Fig 21 but with the mounting sleeve rotated 90°,
Fig 24 corresponds to Fig 22 but with the mounting sleeve in the position shown in Fig 23,
Fig 25 is a cross-sectional view of the wash basin brought against a wall with an attachment screw extending through its mounting sleeve,
Fig 26 is a cross-sectional, isometric view through the back wall of the wash basin and illustrates the same situation as Fig 25,
Fig 27 corresponds to Fig 25 but with the attachment nut tightened,
Fig 28 corresponds to Fig 26 again with the attachment nut tightened, and
Fig 29 corresponds to Fig 27 but with the mounting sleeve rotated for height adjustment.

### Description of Embodiments

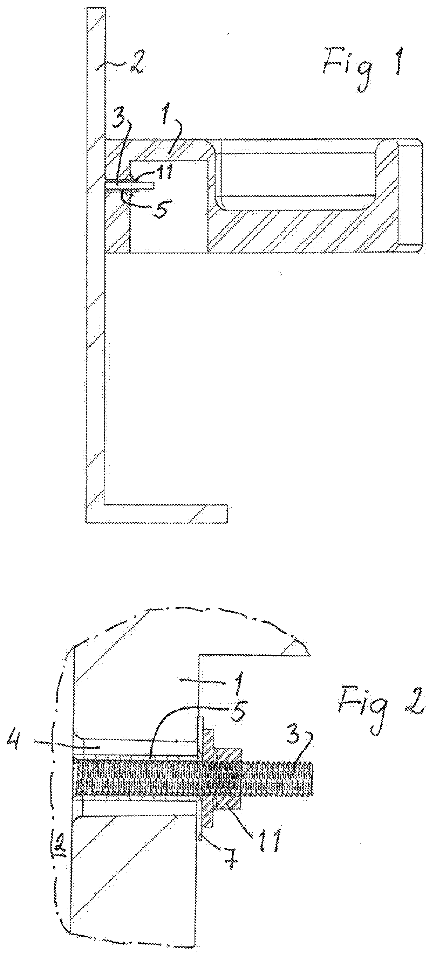

Figs 1 and 2 illustrate a wash basin 1 or the like mounted to a wall 2, provided with preferably two fixed attachment screws 3 at the same level. The back wall of the wash basin 1 is provided with holes 4, through which the attachment screws 3 can extend. A first embodiment of a mounting device for accomplishing a favorable mounting not according to the invention comprises a mounting sleeve 5 and an attachment nut 11.

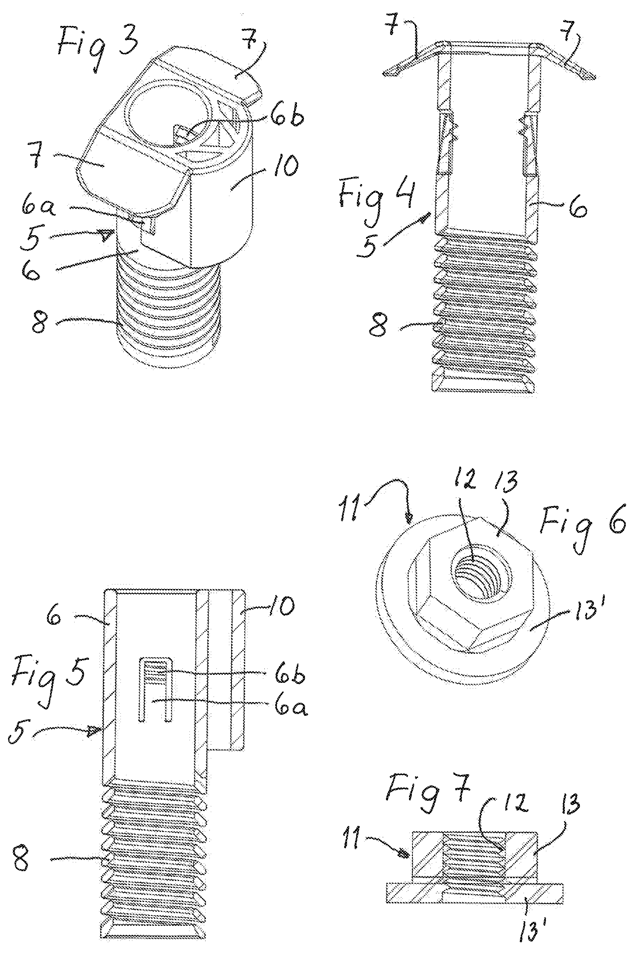

The mounting sleeve 5 is shown in Figs 2 and 3 and is preferably made of a strong plastic material with a certain inherent flexibility, for example reinforced polyamide. Its main portion is a tube 6 with larger diameter than the attachment screw 3. At its upper end the tube 6 may be provided with two diametrically opposed wings 7, extending substantially perpendicularly out from the brim of the tube but with a certain inclination down against the tube 6. (Alternatively, for example one, three, four or more such wings can be provided.) The wings 7 constitute a flexible holding means.

The tube 6 can be provided with for example two longitudinal, flexible tongues 6a with internal thread portions 6b at a somewhat smaller diameter than the attachment screw 3. The threads of these portions 6b correspond with the thread of the attachment screw 3. This design allows the mounting sleeve 5 to be pushed onto its attachment screw and remain in the attained position. Alternatively, the tube 6 is provided with internal threads and the tongues 6a are dispensed with, so that the mounting sleeve 5 has to be threaded onto its attachment screw 3.

In order to provide the mounting sleeve 5 with a certain longitudinal flexibility for a purpose to be described, it has a longitudinally flexible portion, in the shown case a thread-shaped spiral 8 or helical portion in the end opposite the wings 7. The helical portion preferably has the same diameter as the tube 6. The longitudinally flexible portion may have another position along the mounting sleeve and another design.

The tube 6 is preferably externally provided with a longitudinal eccentric portion 10 for a purpose to be described. The eccentric portion is preferably placed between the two wings 7or perpendicularly to a line between these. As appears most clearly in Fig 5, this eccentric portion 10 may be hollow,

An attachment nut 11 is shown in Figs 6 and 7. It is internally provided with a hole 12 with a thread corresponding to the thread of each attachment screw 3 and externally with a tool grip 13, preferably in the form of a hexagonal nut portion. The attachment nut 11 is normally provided with a fixed washer portion 13', but a separate washer may alternatively be used. The attachment nut 11 may be made of metal or plastic.

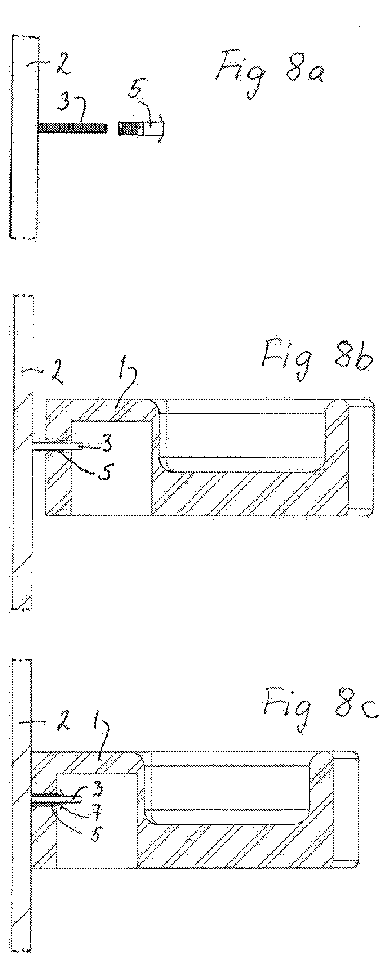

As a first mounting stage, each attachment screw 3 can be provided with a mounting sleeve 5, as is illustrated in Fig 8a. Due to its construction, the mounting sleeve 5 can be pushed onto the attachment screw 3 but will then remain in its reached position. The mounting sleeve can simply be pushed into contact with the wall 2, but it is alternatively possible to leave a distance from the mounting sleeve to the wall. After the mounting of the mounting sleeve 5, its wings 7 are to extend along a vertical line with one wing generally upwards.

When a wash basin 1 is to be attached to the wall 2, it is pushed over the mounting sleeves 5, so that their wings 7 are bent down, as shown in Fig 8b. When the wash basin wall 1 has passed the wings 7, the latter will snap up to their original positions, as shown in Figs 8c. This mounting step can be performed by one person in spite of the rather great weight of the wash basin, as no precision is needed and the wash basin can be released after this mounting step.

Due to the use of the mounting sleeves 5, which are shorter than the attachment screws 3, the comparatively large holes 4 in the wash basin 1 are to be matched onto the attachment screws with much smaller diameter, which facilitates the mounting for the person, who does not even see the holes.

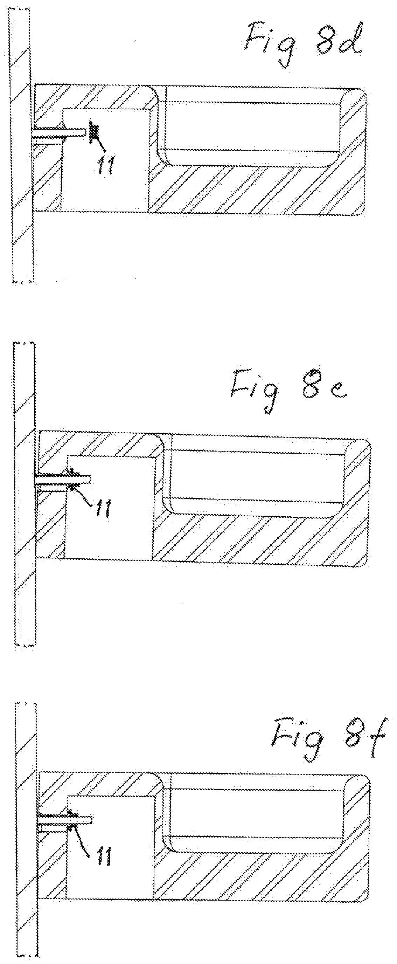

Due to the engagement of the mounting sleeve thread portions 6b with the attachment screws 3 and due to the snapped-up wings 7, one of which is extending generally upwards, the wash basin 1 is now securely held on the attachment screws 3 and can be released by the mounting person. When released, the wash basin 1 can attain a somewhat sloping position, as illustrated in Figs 8d and 8e.

The final mounting of the wash basin 1 is obtained by means of attachment nuts 11, which are mounted and tightened on the attachment screws 3 over the wings 7 of the mounting sleeves 5. This is shown in Figs 8d-f,

In Fig 8d the wash basin 1 hangs-somewhat sloping-against the wings 7. The mounting person can leave the basin and fetch the attachment nuts 11 and a tool for its attachment.

The tightening of the attachment nut 11 has started in Fig 8e, and the sloping of the wash basin becomes less and less during the tightening.

A final stage is shown in Fig 8f. Here, the thread-shaped spiral 8 of the mounting sleeve 5 is being compressed for shortening of the mounting sleeve 5; the mounting sleeve 5 is allowed to move on its attachment screw 3 due to the flexible tongues 6a. The wings 7 are pressed to a vertical position into full engagement with the wash basin 1.

When the mounting has been completed, the situation depicted in Figs 1 and 2 has been reached. It is obvious, especially from Fig 2, that the wings 7-due to the longitudinal flexibility of the mounting sleeve 15-are now vertical and tightened between the wash basin 1 and the attachment nut 11. The entire force is transmitted to the wash basin 1, which will not be able to move even after extended use.

It may be difficult even for a skilled craftsman to mount the two attachment screws 3 at exactly the same height and at the exact desired distance from each other, especially in concrete or brick walls. Also, the attachment screws do not always extend perpendicularly out from the wall. In order to compensate for such deficiencies it is customary to provide the back wall of the wash basin 1 with somewhat oval holes, whose minimal cross-sectional dimension is larger than the diameter of the attachment screw 3. Such oval holes can compensate for deviations in the horizontal sense but not in the vertical sense.

According to standard EN32, holes in wash basins shall have the following dimensions: height 20 ±2 mm and length 30±2 mm. The wall thickness at the holes could be 32±3 mm and c/c for the two holes shall be 280±10 mm.

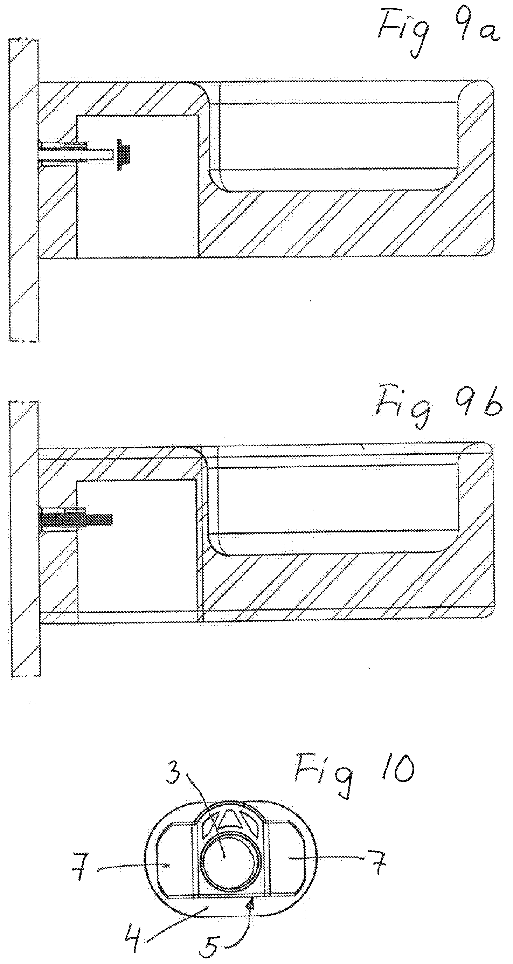

As has appeared, the normal position for the wings 7 is vertical, whereby they perform their intended function to hold the wash basin 1 to the attachment screws 3 during mounting. However, as illustrated with and without attachment nut 11 in Figs 9a and 9b, a height adjustment can be performed by rotating either of or possibly both mounting sleeves 5 to the degree necessary for obtaining the desired height adjustment by means of the eccentric portions 10 in engagement with the wash basin holes.

If there later is a need to dismount the wash basin, first the attachment nut 11 is unthreaded. As depicted in Fig 10, the mounting sleeve 5 can then be rotated to a position where the otherwise stopping wings 7 are within the limits of the oval hole 4. The wash basin can now be freely removed from the attachment screws.

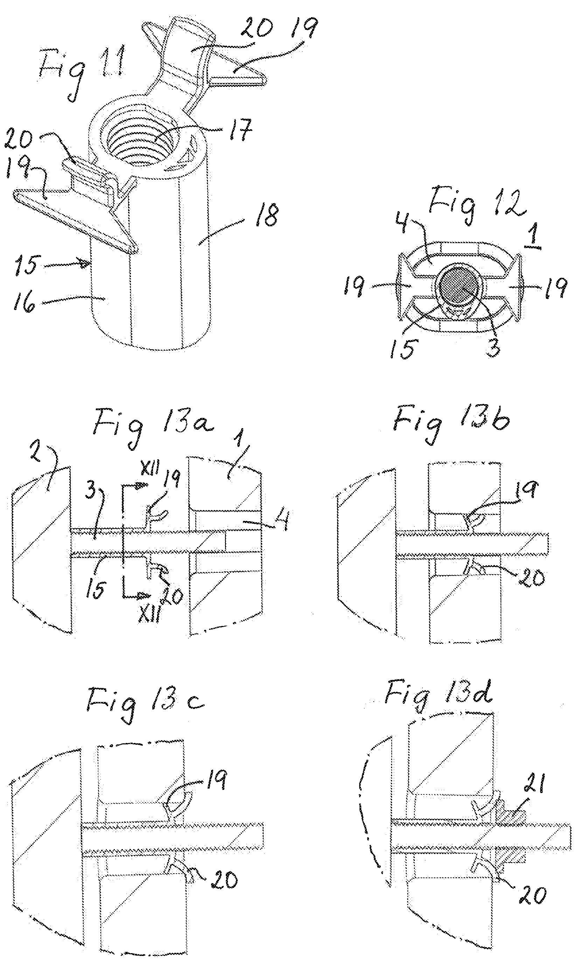

A second embodiment of a mounting sleeve for a mounting device not according to the invention is shown in Fig 11. This mounting sleeve 15 may be made of the same material as the mounting sleeve 5 of the first embodiment and comprises a tube 16 with internal threads 17 for cooperation with an attachment screw 3. Alternatively, the tube 16 could be provided with tongue and thread portions, as is shown for the mounting sleeve 5 of Figs 3-5, The mounting sleeve 15 is also provided with a longitudinal eccentric portion 18 with the same design and purpose as the eccentric portion 10 of the mounting sleeve 5.

The flexible holding means in this embodiment comprises at either side of the end of the tube 16 a guide wing 19 and a holding wing 20. The guide wings 19 extend generally perpendicularly out from the tube 16, whereas each holding wing 20 extends generally in the longitudinal direction of the tube 16 from an intermediate part of the guide wing 19. The holding wings 20 may preferably, as shown, have curved ends for a reason to be described. As viewed from the end of the mounting sleeve 15, the eccentric portion 18 is preferably placed between the two holding means 19, 20.

Fig 12 illustrates in an end view the relative positions of the different parts-corresponding to Fig 13a - when a wash basin 1 is to be pushed onto the attachment screw 3 provided with a mounting sleeve 15 according to the second embodiment. It appears that the hole 4 in the wash basin back wall is clearly oval and that the guiding wings 19 extend outside the hole 4 also in its wider dimension.

Fig 13 a shows the beginning of the mounting. The wash basin 1 has been moved to the left in the drawing so far that the hole 4 in its back wall is partly over the attachment screw 3 previously provided with the mounting sleeve 15. It appears that there are great tolerances in the relative position of the wash basin 1, as the diameter of the attachment screw 3 is small in comparison with the cross dimension of the oval hole 4. It also appears that the guide wings 19 extend outside the longest dimension of the hole 4, whereas the holding wings 20 are inside this dimension. The purpose hereof will appear below.

In Fig 13b the movement has continued, so that the wings 19 and 20 are inside the hole 4. The guide wings 19 have been flexed inwardly, whereas the holding wings 20 slide against the wall of the hole 4.

Fig 13c shows the situation after further movement when the holding wings 20 are outside the back wall of wash basin 1. Due to the interaction between the guide wings 19 and the walls of the hole 4, the holding wings 20 will be pressed apart and engage the wall outside the hole 4,

The wash basin 1 is now held by the holding wings 20 on the mounting sleeve 15 in such a way that it can be released by the mounting person.

If the two attachment screws 3 are not at the same height, an adjustment by means of the eccentric portion 18 can now be performed in that the mounting sleeve 15 is rotated somewhat.

The final mounting depicted in Fig 13d can now be performed by tightening an attachment nut 21 of the same type as the attachment nut 11 for the first embodiment. The attachment nut 21 will engage the holding wings 20, which again is possible, as there are two wings and symmetry is obtained.

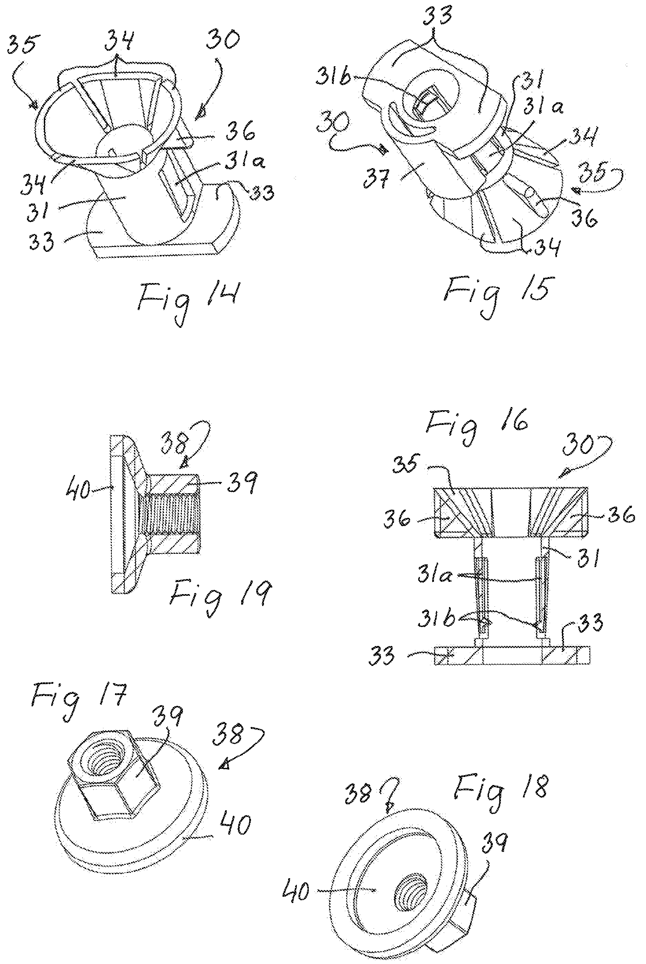

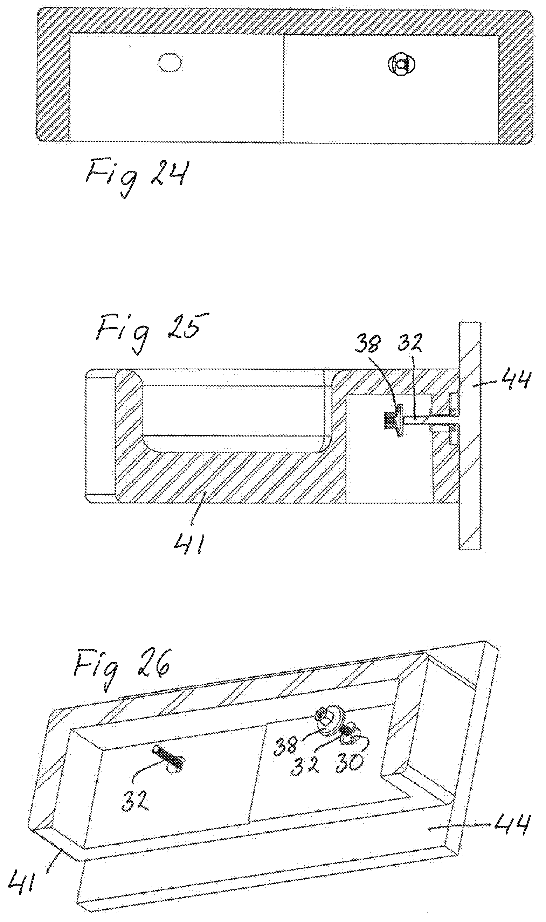

An embodiment of a mounting device according to the invention is shown in Figs 14-29, to which reference now is made. A mounting sleeve 30 for this mounting device is shown in Figs 14-16 and is preferably made of a strong plastic material with a certain inherent flexibility. Its main portion is a tube 31 with somewhat larger diameter than an attachment screw 32 (first shown in Fig 25), with which it is intended to cooperate.

At one of its ends the tube 31 is provided with fixed flanges 33, extending perpendicularly out in two opposite directions from the tube 31, and at its other end with somewhat flexible wings 34, extending obliquely out from the tube 31 and together forming a funnel 35 with an oval cross-sectional shape. Integral with wings and extending out under the funnel 35 along the longer dimension of the funnel and in the same direction as the flanges 33 are two triangular ribs 36. The lower edge of each rib 36 is perpendicular to the tube 30. The wings 34 forming the funnel 35 may be defined as a flexible holding means.

The tube 31 is provided with for example two longitudinal, flexible tongues 31a with internal thread portions 31b at a somewhat smaller diameter than and for engagement with the attachment screw 32. This design allows the mounting sleeve 30 to be pushed onto its attachment screw and remain in the attained position.

The tube 31 is preferably externally provided with a longitudinal eccentric portion 37 for a purpose to be described. The eccentric portion is preferably placed between the two flanges 33 or perpendicularly to a line between these. As appears most clearly in Fig 15, this eccentric portion 37 may be hollow.

An attachment nut 38 is shown in Figs 17-19. It is internally provided with a hole with a thread corresponding to the thread of the attachment screw 32 and externally with a tool grip 39, preferably in the form of a hexagonal nut portion. The attachment nut 38 is provided with a hood portion 40 with enough dimensions to cover the flanges 33 of the mounting sleeve 30. The attachment nut 38 can be made of plastic or metal, preferably plastic.

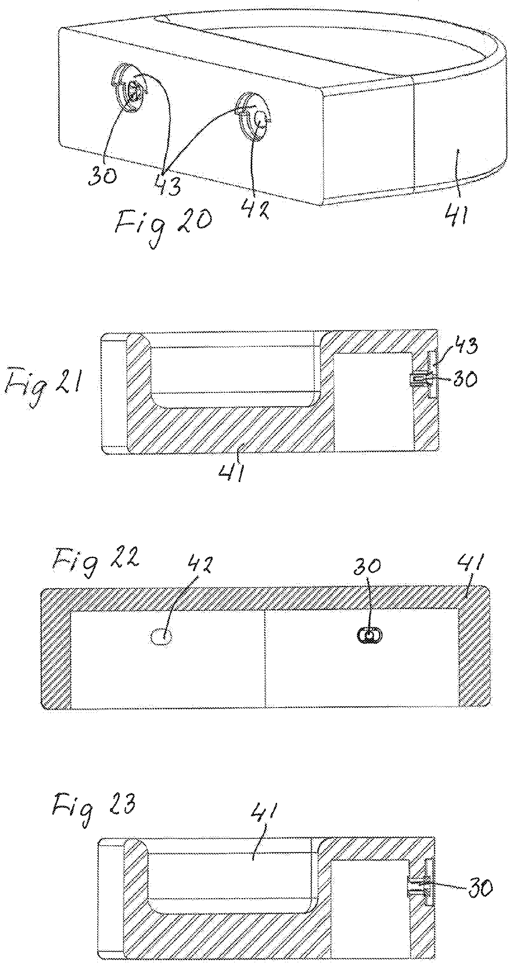

Fig 20 is an illustration from the back side of a wash basin 41, which appears in different cross-sections in all remaining Figs 21-29, showing different mounting stages. Fig 20 shows a mounting stage also shown in Figs 23 and 24. The wash basin 41 is in its back wall provided with preferably two oval holes 42. The left one of these is shown provided with a mounting sleeve 30. The longer dimension of the holes 42 is horizontal and will provide access for the two mounting sleeve flanges 33. The back wall is in its shown surface for mounting against a wall provided with notches 43 at the holes 42 with dimensions for providing space for movement therein of the mounting sleeve funnels 35.

A first mounting stage is illustrated in Figs 21 and 22. A mounting sleeve 30 is inserted or pushed into each wash basin hole 42 from the back side of the wash basin 41 with the flanges 33 first. The eccentric portion 37 may be directed downwards.

The immediately following, second mounting stage is illustrated in Figs 23 and 24. Each mounting sleeve 30 is rotated 90°, so that its flanges 33 are supported by the inside of the wash basin back wall and the triangular ribs 36 of the funnel wings 34 are supported by the back wall notch bottom. The length of the mounting sleeve tube 31 is such that the funnel 35 is slightly inwardly compressed at this rotation, which means that the mounting sleeve 30 is held in place with a certain force but still can be moved sideways to a certain extent in the oval hole 42.

The two following mounting stages are illustrated in Figs 25 and 26. The wash basin 41 may now be lifted to the vicinity of attachment screws 32, perpendicularly attached to a vertical wall 44. It will be relatively easy to mate a mounting sleeve 30 in the wash basin 41 with its attachment screw 32. Even if the distance between the mounting sleeves 30 in the wash basin 41 is not exactly the same as the distance between the attachment screws 32, the guiding provided by the mounting sleeve funnels 35 and the possibility to move the wash basin 41 sideways to a certain extent will make it possible to thread the wash basin 41 with its mounting sleeves 30 onto the attachment screws 32, until the back wall of the wash basin 41 comes in contact with the wall 44. Due to the flexibility of the tube tongues 31a (with their internal thread portions 31b) this will be possible.

The combined effect of the engagement between the attachment screw 32 and the internal thread portions 31b of the tube tongues 31a and of the mounting sleeve flanges 33 will now prevent the wash basin 41 from sliding forwards/downwards and hold it in the attained position. This is a very important effect of this embodiment of the invention. It will definitively be possible for one person to mount and attach the wash basin, whereas it earlier has been necessary to employ two persons for this task.

The attachment nuts 38 can now - without stress and without any need to concurrently hold the wash basin 41 - be attached to the attachment screws 32.

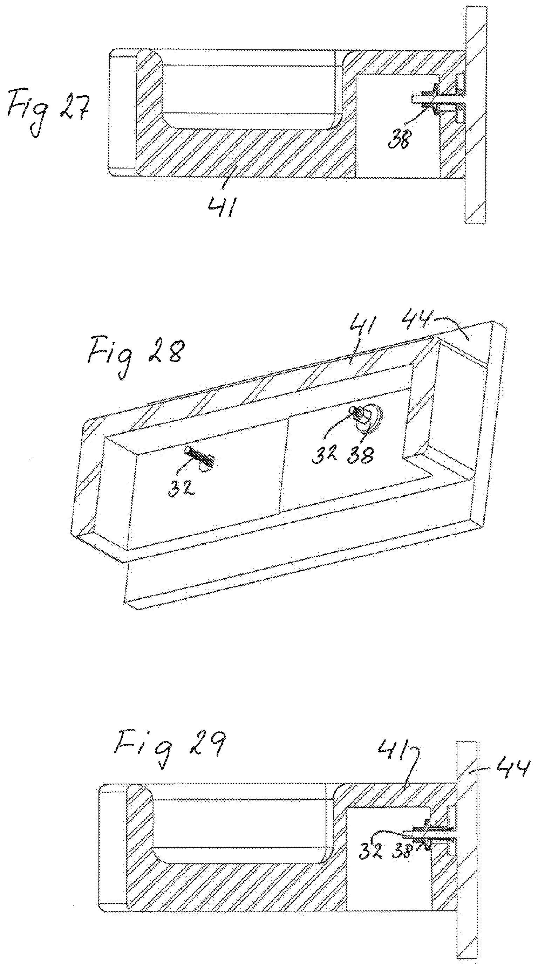

Figs 27 and 28 illustrate the normally last mounting stage, namely the tightening of the attachment nuts 38. It is here to be noted that the internal shape of the attachment nuts 38 means that the tightening force is applied not on the mounting sleeves 30 but on the wash basin back wall. This means that the tightening area becomes larger and that the mounting sleeve 30 is not exposed to the tightening force but only has to carry the weight of the wash basin (normally up to 25 kg).

If the attachment screws 32 are not placed at exactly the same height or otherwise the wash basin 41 is not horizontal after mounting, adjustment can be made by loosening the nuts 38 and rotating one or both mounting sleeves 30 for engaging its eccentric portion 37 in a new position in relation to the hole 42, so that the height difference is compensated for. This is illustrated in Fig 29.

If a wash basin 41 has to be dismounted, the attachment nuts 38 are first removed, whereafter the mounting sleeves 30 are rotated (normally 90°), so that their flanges 33 and funnels 35 can pass through the oval holes 42. This rotation can for example be made by engaging a screwdriver in the hollow eccentric portion 37. The wash basin is now free to be removed. At a new mounting the same mounting sleeves 30 may be used again.

An important advantage with this embodiment is that the mounting sleeve 30 can be premounted in the wash basin holes 42 in the factory or at the mounting site. There is no need for adjustment on the attachment screws 32 for correct positioning in relation to the wash basin back wall, which leads to a faster and more secure mounting.

It should again be stressed that a wash basin has only been picked as an example of a product to be mounted and that the claimed invention is equally applicable to any sanitary or other product to be mounted in the shown and described way.

Modifications are possible within the appended claims.

## Claims

1. A mounting device for the mounting of a wash basin (41) or the like to a wall (44) provided with at least one fixed attachment screw (32), extending perpendicularly out from the wall, the wash basin (41) having at least one hole (42) in its back wall with greater cross dimension than the diameter of the attachment screw, the mounting device comprising a mounting sleeve (30) with a smaller diameter than the hole (42) in the wash basin (41), the mounting sleeve having internal threads (31b) for attachment to the attachment screw (32) an attachment nut (38) with internal threads (12) for cooperation with the attachment screw (32), **characterised by** the mounting sleeve having, flexible holding means (34) towards one end, wherein the flexible holdings means is a number of wings (34) extending obliquely out from said end of the mounting sleeve (30) and forming a funnel (35).

2. A mounting device according to claim 1, wherein the mounting sleeve (30) has longitudinal, flexible tongues (31a) with internal thread portions (31b) thereon for enabling the mounting sleeve (30) to be pushed onto the attachment screw (32).

3. A mounting device according to claim 1 or 2, wherein the mounting sleeve (30) is provided with a longitudinal eccentric portion (37).

4. A mounting device according to any of the preceding claims, wherein two opposite triangular ribs (36) are arranged under the funnel (35), the ribs having lower edges extending generally perpendicularly to the mounting sleeve (30).

5. A mounting device according to claim any of the preceding claims, wherein the mounting sleeve (30) at its end opposite the wings (34) has two flanges (33) extending oppositely out perpendicularly from the mounting sleeve and in directions parallel with the ribs (36), the distance between the wings (34) and the flanges (33) corresponding to the thickness of the wash basin wall with the hole (42).

6. A mounting device according to claim 5, wherein the wash basin wall hole (42) is oval and in its greatest cross dimension allows the passing through of the flanges (33) and wherein the funnel (35) has an oval shape.

7. A mounting device according to claim 5, wherein the attachment nut (38) has a hood portion (40) for covering the flanges (33) without contact.

8. A method for mounting a wash basin (41) or the like **characterised in that** a mounting device according to any of claims 1 to 7 is provided, and **in that** the mounting sleeve (30) has flanges (33), and that the mounting sleeve (30) with its flanges (33) first is inserted in the hole (40) in the wash basin (41), the hole having an oval shape with its greatest cross dimension allowing the insertion of the flanges, and then rotated, so that its flanges (33) bear against one side of the wall having the hole and that its funnel (35) bears against the opposite side of the wall, that the wash basin (41) with the mounting sleeve (30) is pushed onto the attachment screw (32), preferably until contact with the wall (44), and that the attachment nut (38) is screwed onto the attachment screw (32).

9. A method according to claim 8 for the mounting of a wash basin (41) with two holes (42) on a wall (44) with two attachment screws (32), wherein each mounting sleeve (30) may be rotated to a desired extent in the hole (42) in order to place a longitudinal eccentric portion (37) thereon in a suitable position for compensating for possible height differences between the attachment screws (32).

## Patentansprüche

1. Montagevorrichtung zur Montage eines Waschbeckens (41) oder dergleichen an einer Wand (44), die mit zumindest einer festen Befestigungsschraube (32), die senkrecht von der Wand nach außen erstreckt, bereitgestellt ist, wobei das Waschbecken (41) in seiner Rückwand zumindest ein Loch (42) mit größerer Querabmessung als der der Befestigungsschraube aufweist, wobei die Montagevorrichtung Folgendes umfasst:
eine Montagehülse (30) mit einem kleineren Durchmesser als dem des Lochs (42) im Waschbecken (41), wobei die Montagehülse Innengewinde (31b) zur Befestigung an der Befestigungsschraube (32) aufweist, eine Befestigungsmutter (38) mit Innengewinde (12) zum Zusammenwirken mit der Befestigungsschraube (32), **dadurch gekennzeichnet, dass** die Montagehülse an einem Ende flexible Haltemittel (34) aufweist, wobei das flexible Haltemittel eine Anzahl von Flügeln (34) ist, die sich vom Ende der Montagehülse (30) schräg nach außen erstrecken und einen Trichter (35) ausbilden.

2. Montagevorrichtung nach Anspruch 1, wobei die Montagehülse (30) flexible Längslaschen (31a) mit Innengewindeabschnitten (31b) daran aufweist, um das Schieben der Montagehülse (30) auf die Befestigungsschraube (32) zu ermöglichen.

3. Montagevorrichtung nach Anspruch 1 oder 2, wobei die Montagshülse (30) mit einem exzentrischen Längsabschnitt (37) bereitgestellt ist.

4. Montagevorrichtung nach einem der vorangehenden Ansprüche, wobei unter dem Trichter (35) zwei gegenüberliegende dreieckige Rippen (36) angeordnet sind, wobei die Rippen untere Kanten aufweisen, die sich im Wesentlichen senkrecht zur Montagehülse (30) erstrecken.

5. Montagevorrichtung nach einem der vorangehenden Ansprüche, wobei die Montagehülse (30) an ihrem den Flügeln (34) gegenüberliegenden Ende zwei Flansche (33) aufweist, die sich entgegengesetzt senkrecht zur Montagehülse in zu den Rippen parallelen Richtungen (36) nach außen erstrecken, wobei der Abstand zwischen den Flügeln (34) und den Flanschen (33) der Stärke der Waschbeckenwand mit dem Loch (42) entspricht.

6. Montagevorrichtung nach Anspruch 5, wobei das Waschbeckenwandloch (42) oval ist und an seiner größten Querabmessung das Durchführen der Flansche (33) ermöglicht und wobei der Trichter (35) eine ovale Form aufweist.

7. Montagevorrichtung nach Anspruch 5, wobei die Befestigungsmutter (38) einen Haubenabschnitt (40) aufweist, um die Flansche (33) kontaktfrei zu bedecken.

8. Verfahren zur Montage eines Waschbeckens (41) oder dergleichen, **dadurch gekennzeichnet, dass** eine Montagevorrichtung nach einem der Ansprüche 1 bis 7 bereitgestellt wird und dass die Montagehülse (30) Flansche (33) aufweist, und dass die Montagehülse mit ihren Flanschen (33) zunächst in das Loch (40) im Waschbecken (41) eingeführt wird, wobei das Loch eine ovale Form aufweist, deren größte Querabmessung das Einführen der Flansche ermöglicht, und anschließend gedreht wird, sodass ihre Flansche (33) gegen eine Seite der Wand mit dem Loch anliegen und ihr Trichter (35) gegen die gegenüberliegende Seite der Wand anliegt,
dass das Waschbecken (41) mit der Montagehülse (30) auf die Befestigungsschraube (32) geschoben wird, vorzugsweise bis es mit der Wand (44) in Kontakt steht, und dass die Befestigungsmutter (38) auf die Befestigungsschraube (32) geschraubt wird.

9. Verfahren nach Anspruch 8 zur Montage eines Waschbeckens (41) mit zwei Löchern (42) an einer Wand (44) mit zwei Befestigungsschrauben (32), wobei jede Montagehülse (30) bis zu einem gewünschten Maß im Loch (42) drehbar ist, um einen exzentrischen Längsabschnitt (37) daran in eine Position zu bringen, die geeignet ist, mögliche Höhenunterschiede zwischen den Befestigungsschrauben (32) auszugleichen.

## Revendications

1. Dispositif de montage pour le montage d'un lavabo (41) ou autre analogue sur une paroi (44) pourvue d'au moins une vis de fixation fixe (32), s'étendant perpendiculairement à partir de la paroi, le lavabo (41) ayant au moins un orifice (42) dans sa paroi arrière d'une dimension transversale plus grande que le diamètre de la vis de fixation, le dispositif de montage comprenant
un manchon de montage (30) d'un diamètre plus petit que l'orifice (42) dans le lavabo (41), le manchon de montage ayant des filetages intérieurs (31b) pour se fixer à la vis de fixation (32)
un écrou de fixation (38) avec des filetages intérieurs (12) pour coopérer avec la vis de fixation (32), **caractérisé en ce que** le manchon de montage présente un moyen de maintien flexible (34) vers une extrémité, dans lequel le moyen de maintien flexible représente un certain nombre d'ailettes (34) s'étendant obliquement à partir de ladite extrémité du manchon de montage (30) et formant un entonnoir (35).

2. Dispositif de montage selon la revendication 1, dans lequel le manchon de montage (30) présente des languettes longitudinales, flexibles (31a) avec des parties de filetage intérieur sur celles-ci (31b) pour permettre au manchon de montage (30) d'être poussé sur la vis de fixation (32).

3. Dispositif de montage selon la revendication 1 ou 2, dans lequel le manchon de montage (30) est pourvu d'une partie excentrique longitudinale (37).

4. Dispositif de montage selon l'une des revendications précédentes, dans lequel deux nervures triangulaires opposées (36) sont agencées sous l'entonnoir (35), les nervures ayant des bords inférieurs s'étendant globalement perpendiculairement au manchon de montage (30).

5. Dispositif de montage selon l'une des revendications précédentes, dans lequel le manchon de montage (30) présente, au niveau de son extrémité opposée aux ailettes (34), deux brides (33) s'étendant de manière opposée perpendiculairement à partir du manchon de montage et dans des directions parallèles aux nervures (36), la distance entre les ailettes (34) et les brides (33) correspondant à l'épaisseur de la paroi du lavabo avec l'orifice (42).

6. Dispositif de montage selon la revendication 5, dans lequel l'orifice de paroi du lavabo (42) est de forme ovale et permet le passage des brides (33) grâce à sa plus grande dimension transversale et dans lequel l'entonnoir (35) a une forme ovale.

7. Dispositif de montage selon la revendication 5, dans lequel l'écrou de fixation (38) présente une partie de capuchon (40) pour couvrir les brides (33) sans contact.

8. Procédé de montage d'un lavabo (41) ou autre analogue, **caractérisé en ce qu'**un dispositif de montage selon l'une des revendications 1 à 7 est prévu, et **en ce que** le manchon de montage (30) présente des brides (33), et que le manchon de montage avec ses brides (33) est d'abord inséré dans l'orifice (40) dans le lavabo (41), l'orifice ayant une forme ovale avec sa plus grande dimension transversale permettant l'insertion des brides, et ensuite tourné, de sorte que ses brides (33) s'appuient contre un côté de la paroi ayant l'orifice et que son entonnoir (35) s'appuie contre le côté opposé de la paroi,
que le lavabo (41) avec le manchon de montage (30) est poussé sur la vis de fixation (32), de préférence jusqu'au contact avec la paroi (44), et
que l'écrou de fixation (38) est vissé sur la vis de fixation (32).

9. Procédé selon la revendication 8 pour le montage d'un lavabo (41) ayant deux orifices (42) sur une paroi (44) avec deux vis de fixation (32), dans lequel chaque manchon de montage (30) peut être tourné à un degré souhaité dans l'orifice (42) afin de placer une partie excentrique longitudinale (37) sur celui-ci dans une position appropriée pour compenser des différences de hauteur possibles entre les vis de fixation (32).
